# EUROPEAN PATENT SPECIFICATION

(11) **EP 0 997 721 B1**
(45) Date of publication and mention of the grant of the patent: **10.04.2013**
(21) Application number: 98954712.0
(22) Date of filing: 17.11.1998
(51) Int. Cl.: G01L 9/00

(54) **PRESSURE SENSOR AND A METHOD OF MANUFACTURING THE SAME**
DRUCKSENSOR UND HERSTELLUNGSVERFAHREN DESSELBEN
CAPTEUR DE PRESSION ET SON PROCEDE DE FABRICATION

(30) Priority: 14.05.1998 JP 13198798
(43) Date of publication of application: 03.05.2000
(73) Proprietor: ESASHI, Masayoshi, Sendai-shi, Miyagi 982-0807 (JP)
(72) Inventor: ESASHI, Masayoshi, Sendai-shi Miyagi 982-0807 (JP); HAGA, Yoichi Room 1003, Sendai-shi Miyagi 980-0811 (JP); KATSUMATA, Takashi, Haramachi-shi Fukushima 975-0033 (JP)
(74) Representative: Smith, Peter James
(86) International application number: PCT/JP1998/005163
(87) International publication number: WO 1999/058944

(56) References cited:
- JP-A- 7 260 617
- JP-A- 8 201 196
- US-A- 5 619 046
- PATENT ABSTRACTS OF JAPAN vol. 1998, no. 09, 31 July 1998 (1998-07-31) & JP 10 111202 A (YAZAKI CORP), 28 April 1998 (1998-04-28)

## Description

### Technical Field

This invention relates to a pressure sensor which permits en ultrafine element to be formed easily, and which is optimal ly used to determine various kinds of pressures in the body, such as a blood pressure, etc. by incorporating the pressure sensor in a catheter and a guide wire inserted into the body, or by directly inserting the pressure sensor into a blood vessel and the like, and to form a photodetector type pressure sensor for a capillary and the like; and a method of manufacturing the same.

### Background of the Invention

A pressure sensor of related art utilizing a photodetecting principle by using an optical fiber does not utilize an electric signal, such as a piezoresistive signal, etc. Accordingly, this pressure sensor rarely receives environmental disturbance ascribed to the electricity and magnetism, and has a possibility of being applied to the interior of an organism (refer to Japanese Patent Publication No. 3128/1990, Japanese Patent Laid-Open No. 235731/1986 and Japanese Patent Laid-Open No. 201196/1996).

The pressure sensors using an optical fiber are roughly classified under pressure sensors of the type which has a cantilever beam type silicon structure fixed to a side surface of an optical fiber with a mirror, which faces an end surface of the optical fiber, fixed to a front end of the beam, and which utilizes the variation of the quantity of reflected light caused by the variation of the position of the mirror due to the flexure of the beam ascribed to pressure variation, and pressure sensors of the type which has on a front end of an optical fiber a silicon structure having a total reflection mirror serving also as a movable diaphragm, and joined to a glass structure and fixed to an end surface of the optical fiber by using a bonding agent, and which measures an amount of flexure of the diaphragm as variation of the intensity of the light.

However, in a pressure sensor of the type which utilizes a side surface of an optical fiber, a side wall is tapered to form a large etching window. This causes the dimensions of a pressure sensor portion to increase, and also makes it difficult to insert the pressure sensor into a working channel of a catheter and an endoscope, and obtain a pressure sensor capable of being inserted directly into a capillary, such as a blood vessel and the like.

There are related techniques comprising a method, as a method of fixing a total reflection mirror serving also as a movable diaphragm to a front end of an optical fiber, of forming a fine ring-shaped bonding agent layer on a posiresist layer, which is provided on a glass plate, by exposing the posiresist layer via an Al mask, transferring the bonding agent layer onto a front end of an optical fiber, fixing the resultant layer to a diaphragm formed and held in a frame of a silicon substrate via a holding portion, and cutting off the holding portion with a laser beam. However, in this method, an efficiency of transferring the bonding agent layer onto the front end of the optical fiber is low, and it takes much time and labor to separate the diaphragm from the silicon substrate by cutting off the holding portion with a laser beam. Therefore, this method is inferior in the manufacturing efficiency of a pressure sensor and the yield thereof.

The present invention has been devised so as to eliminate the drawbacks, such as a low yield on the manufacturing of a pressure sensor portion, or a low yield on the connecting of a pressure sensor and an optical fiber together which are encountered in an optical fiber type pressure sensor of related art capable of being used in the interior of an organism such as a blood vessel, etc. and a capillary.

### Disclosure of the Invention

The present invention provides a pressure sensor according to claim 1.

The present invention further provides a method of manufacturing pressure sensors according to claim 3.

### Brief Description of the Drawings

Fig. 1 is a sectional view of an example of a pressure sensor;
Figs. 2a to 2h are explanatory drawings showing examples of steps of manufacturing reflective type movable diaphragm units;
Figs. 3a to 3d are explanatory drawings showing an example of a process for bonding a reflective type diaphragm unit and an optical fiber to each other; and
Fig. 4 is a sectional view of another example of a pressure sensor, which does not form part of the claimed invention.

### Mode for Carrying Out the Invention

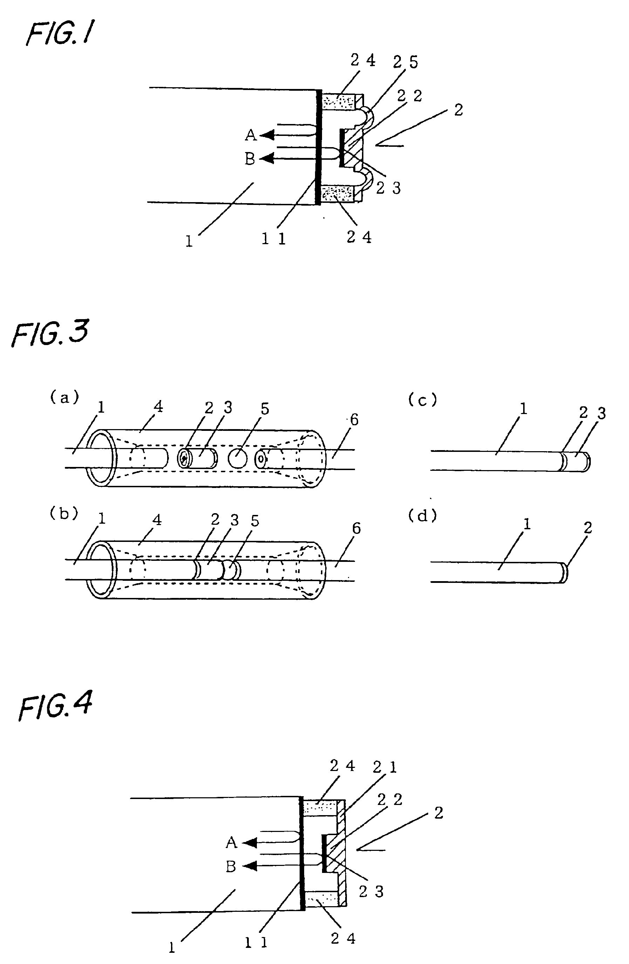

In the pressure sensor according to the present invention, a reflective type movable diaphragm unit having a mesa portion of a thick SiO₂ film and a light reflecting mirror portion of a thin Al film in the center of a corrugated type diaphragm portion formed of a circular, thin film of SiO₂, and a spacer serving also as an adhesive layer and comprising a thick film of polyimide at a circumferential edge section of the diaphragm portion is fixed in a sealed state to a front end, which has a half mirror layer of ZnS, of an optical fiber of not larger than 125 µm in diameter. An example of this pressure sensor is shown in Fig. 1. A reference numeral 1 denotes an optical fiber, 11 a ZnS layer (half mirror layer) thereof, 2 a reflective type movable diaphragm unit, 25 a SiO₂ layer (corrugated type diaphragm portion) thereof, 22 a SiO₂ layer (mesa portion) thereof, 23 an Al layer (light reflecting mirror portion) thereof, and 24 a polyimide layer (spacer serving also as an adhesive layer) thereof.

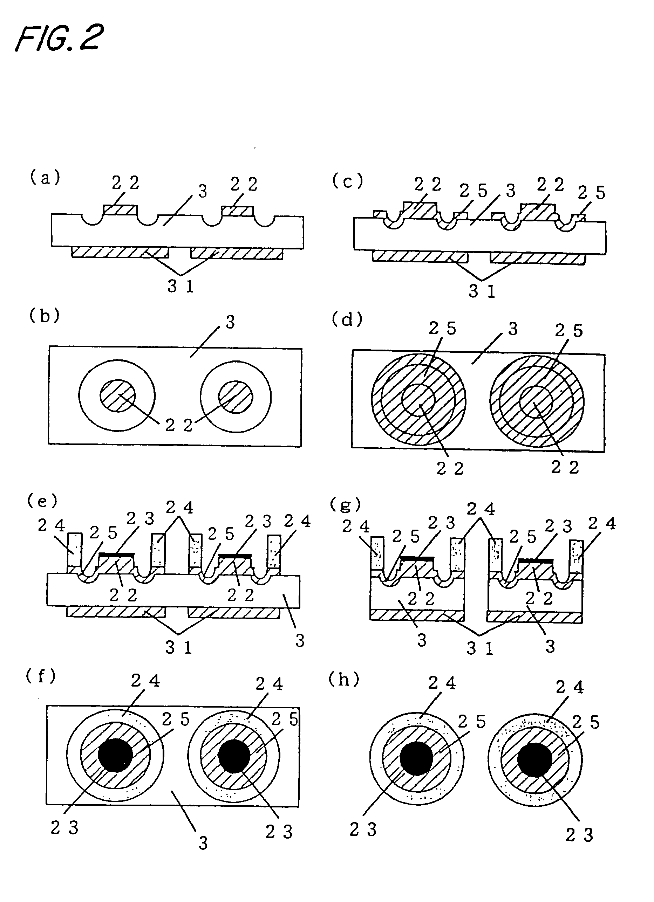

The manufacturing of the reflective type movable diaphragm unit of this pressure sensor can be done, for example, by the following method. Namely, the reflective type movable diaphragm unit of the pressure sensor can be manufactured as shown in the examples of steps in Figs. 2a to 2h, by a step (a, b) of forming mesa portions 22 by digging annular grooves 26 for corrugated diaphragm portions in a front surface of a silicon substrate 3, accumulating SiO₂ layers on central circular portions defined by the grooves 26, and leaving the SiO₂ layers circularly, a step (a, b) of accumulating on a rear surface of the silicon substrate 3 SiO₂ layers as masks 31 for separating reflective type movable diaphragm units 2 individually from the silicon substrate 3, a step (c, d) of forming corrugated type diaphragm portions 25 by further accumulating SiO₂ layers on the front surface of the silicon substrate 3 including the grooves 26, a step (e, f) of forming light reflecting mirror portions 23 by accumulating Al films on the mesa portions 22, a step (e, f) of forming spacers serving also as adhesive layers 24 and comprising polyimide on circumferential edge sections of the corrugated type diaphragm portions 25, and a step (g, h) of separating the reflective type movable diaphragm units 2 from the silicon substrate 3.

The manufacturing steps illustrated in Fig. 2 are the manufacturing steps used in a case where a plurality of reflective type movable diaphragm units are formed on one silicon substrate, and then separated therefrom. Accordingly, a plurality of reflective type movable diaphragm units can be formed at once by using a silicon substrate of a large area, and, moreover, the manufacturing steps themselves are simple. Therefore, the through-put and yield become high, and a production efficiency can be improved easily.

The bonding of an optical fiber 6 of not larger than 125 µm in diameter having a half mirror layer of ZnS at a front end thereof to a front end of a reflective type movable diaphragm unit manufactured by the steps of Fig. 2 can be done, for example, by the following method. Namely, as shown the examples of steps in Figs. 3a to 3d, the method includes a step (a) of inserting the above-mentioned reflective type movable diaphragm unit 2 and an optical fiber 1 of not larger than 125 µm in diameter having a half mirror layer of ZnS at a front end thereof into a capillary 4 so that the ends thereof are opposed to each other, and inserting a microbead 5 and another optical fiber 6 for a bonding purpose from the other end of the capillary thereinto, a step (b) of bringing the reflective type movable diaphragm unit 2 and optical fiber 1 into close contact with each other by the microbead 5 and bonding optical fiber 6, and heating the diaphragm unit, a step (c) of fixing in a sealed state the diaphragm unit to the optical fiber 1 with a polyimide layer 24 turned into an adhesive layer by the heating operation, and a step (d) of removing the silicon substrate 3 by etching the same.

Referring to Fig. 2, the thickness of the silicon substrate 3 in use is suitably determined in the step of bonding the reflective type movable diaphragm unit 2 and optical fiber 1 together. When the silicon substrate is too thin, the handling thereof with respect to the capillary 4 becomes difficult, and, when it is too thick, it is tapered in the step of separating the reflective type movable diaphragm unit 2 therefrom, so that the diaphragm unit cannot be inserted into the capillary 4. A not greater than 5 mm silicon substrate is used generally, a not greater than 1 mm silicon substrate particularly, and a 0.1 to 0.5 mm silicon substrate more particularly.

A both-side polished silicon substrate is used to carry out photolithography on both surfaces thereof. Although a surface direction is not specially limited when the silicon substrate is removed by a dry etching method based on a micromachining system directed to the formation of a semiconductor circuit, it is suitably determined when wet etching is carried out. In general, a surface direction of (100) or (110) is used.

Referring to Figs. 2a and 2b, the annular grooves 26, which are dug in the front surface of the silicon substrate 3, for the corrugated type diaphragm portions determine the shape of the diaphragm portions 25, and the shape of the grooves 26 can be determined suitably in accordance with the residual stress on and the pressure deformability of the corrugated type diaphragm portions 25. The depth of the annular grooves 26 is 2 to 6 µm, and preferably 5 µm, the width thereof 8 to 12 µm, and preferably 10 µm, and the diameter thereof 71 to 79 µm, and preferably 75µm.

The SiO₂ layers provided on the front surface of the silicon substrate 3 are to form mesa portions 22 of the reflective type movable diaphragm units 2, and the thickness of the layers can be determined suitably in accordance with the function, etc. of the mesa portions of preventing the light reflecting mirror portions 23 comprising Al layers from being bent when the diaphragms are deformed. This thickness is set to not larger than 15 µm generally, not larger than 10 µm particularly, and

2 to 5 µm more particularly.

Accordingly, a method of forming the mesa portions 22 by circularly leaving the SiO₂ layers on the front surface of the substrate can be carried out by additionally providing a SiO₂ layer by a suitable system, such as a CVD system and the like, and removing (a, b) an unnecessary part of the SiO₂ layer by a micromachining system and the like directed to the formation of a semiconductor circuit in which the SiO₂ layer is subjected to patterning and etching based on photolithography, whereby the SiO₂ layers 22 are circularly left.

Referring further to Figs. 2a and 2b, in order that the SiO₂ layers provided on the rear surface of the silicon substrate 3 are used as masks 31 for an etching operation for separating the reflective type movable diaphragm units 2 from the silicon substrate 3, the thickness of the same layers can be determined suitably in accordance with the etching selectivities of the SiO₂ and silicon. This thickness is set to not larger than 2 µm generally, not larger than 1 µm particularly, and 0.5 to 1 µm more particularly.

Therefore, forming the masks 31 for an etching operation by circularly leaving the SiO₂ layers on the rear surface of the substrate can be carried out by a method identical with that used for forming mesa portions 22 on the front surface of the silicon.

As shown in Figs. 2c and 2d, the circular corrugated type diaphragm portions 25 comprising SiO₂ on the silicon substrate constitute substantial movable portions. Therefore, the formation of the diaphragm portions 25 can be suitably determined in accordance with the pressure deformability, etc. of the diaphragm portions 25 with respect to the residual stress at the time of forming the SiO₂ layers. The diaphragm portions can be formed easily, for example, by thermal CVD, plasma CVD using as a material TEOS the residual stress of which can be controlled, etc.

The thickness of the circular corrugated type diaphragm portions 25 comprising SiO₂ layers can be determined suitably in accordance with the pressure deformability of the diaphragm portions working as diaphragms. This thickness is set to not larger than 5 µm generally, not larger than 2 µm particularly, and 0.5 to 1 µm more particularly.

As shown in Figs. 2e and 2f, the formation of the light reflecting mirror portions 23 comprising Al layers can be carried out by removing unnecessary portions of the Al layers, which are provided additionally by a suitable system, such as vapor deposition, etc., by a micromachining system directed to the formation of a semiconductor circuit in which patterning and lift-off by photolithography are carried out, and thereby circularly leaving the Al layers. The formation of the light reflecting mirror portions 23 can also be carried out by providing Al layers additionally by a suitable system, such as vapor deposition, etc., and etching the unnecessary portions of the Al layers by utilizing a photolithographic system. The thickness of the Al layers 23 can be determined suitably in accordance with the necessity of the Al layers of functioning as total reflection mirrors. This thickness is set to not smaller than 0.2 µm generally, 0.2 to 1 µm particularly, and 0.2 to 0.5 µm more particularly.

Referring to Figs. 2e and 2f, the formation of the spacers serving also as adhesive layers 24 and comprising polyimide which extend around the corrugated type diaphragm portions 25 is carried out by patterning the polyimide in the same manner as in a micromachining system directed to the formation of a semiconductor circuit in which the patterning of regular photoresist is done. The conditions for a curing operation carried out after the patterning of the polyimide can be determined suitably due to the necessity of utilizing the polyimide as an adhesive layer for the bonding of the optical fiber 1. The curing operation is carried out at not higher than 250°C for within 1 hour generally, at 100° to 200°C for within 30 minutes particularly, and at 120° to 180°C for 10 to 30 minutes more particularly.

The thickness of the polyimide layers 24 can be determined suitably in accordance with the interference conditions of the light A reflected on the half mirror layer 11 and that B reflected on the light reflecting mirror portion 23. This thickness is set to not larger than 50 µm generally, not larger than 10 µm particularly, and 2 to 5 µm more particularly.

As shown in Figs. 2g and 2h, the separation of the reflective type movable diaphragm unit 2 from the silicon substrate 3 can be carried out by a suitable method, such as etching and the like. Limitations are not specially placed on the etching method as long as proper portions only of the silicon substrate 3 are removed thereby with each constituent element of the reflective type movable diaphragm unit 2 not removed. In general, the separation operation is carried out by dry etching.

Referring to Fig. 3, the optical fiber 1 is obtained by forming the half mirror layer 11 on the end surface thereof, which is formed by processing the fiber so that the flat fiber has a flat surface perpendicular to the lengthwise direction thereof. How to form the half mirror layer 11 is determined suitably in accordance with the necessary conditions for setting the intensity and visibility of reflected light to high levels. For example, a layer of ZnS, etc. having a high refractive index, and a satisfactory reflectance in view of the single layer structure is formed by vapor deposition. The thickness of the layer used is not larger than 200 nm generally, not larger than 100 nm particularly, and 50 to 100 nm more particularly. The material suitable may use plastics or glass or the like.

The thickness and shape of the optical layer are not specially limited, i.e., an optical fiber of a suitable thickness and shape can be used. When the optical fiber is used for a pressure sensor having a superior thinness, especially, a pressure sensor applied to the interior of an organism, such as a blood vessel and the like and a capillary and the like, the diameter thereof is set to not larger than 250 µm generally, not larger than 200 µm particularly, and 100 to 150 µm more particularly.

The inner diameter of the capillary 4 in Fig. 3a can be determined suitably depending upon the outer diameters of the optical fiber 1 and reflective type movable diaphragm unit 2 which are to be bonded together. The inner diameter of the capillary 4 is not specially limited as long as it permits the combining of the optical fiber 1 and reflective type movable diaphragm unit 2 with each other to be done. The outer diameter of the capillary is not specially limited either. In addition, the material for the capillary 4 is not specially limited as long as the optical fiber 1 and reflective type movable diaphragm unit 2 can be brought into close contact with each other therein and heated. For example, glass and the like can be used.

Furthermore, regarding the microbead 5 and optical fiber 6 to be bonded, the materials therefor and the sizes thereof are not specially limited as long as the optical fiber 1 and reflective type movable diaphragm unit 2 can be brought into close contact with each other and heated. For example, glass and the like can be used to form the microbead 5. A stainless steel wire can be substituted for the optical fiber 6 to be bonded.

The shape of the microbead 5 is not specially limited as long as the spacer serving also as an adhesive layer 24 of the reflective type movable diaphragm unit 2 can adhere uniformly to the end surface of the optical fiber 1. For example, the microbead 5 is made spherical, and the microbead 5 and reflective type movable diaphragm unit 2 are brought into point contact with each other. This enables the end surface of the spacer serving also as an adhesive layer 24 and that of the optical fiber 1 can be stuck uniformly to each other even when the end surface of the optical fiber 6 to be bonded and that of the optical fiber 1 are not parallel to each other.

The bonding of the optical fiber 1 and reflective type movable diaphragm unit 2 to each other as shown in Fig. 3b is done by inserting the optical fiber 1 and reflective type movable diaphragm unit 2 into the capillary so that the end surface having the half mirror layer 11 of the former and that having the spacer serving also as an adhesive layer 24 of the latter are opposed to each other, bringing these end surfaces into close contact with each other by the microbead 5 inserted from the other end of the capillary, and heating the diaphragm unit. The adhesion of the reflective type movable diaphragm unit may be at such a level that permits the diaphragm unit 2 to be fixed after it is heated to the optical fiber 1, and is not specially limited. The heating conditions can be determined suitably depending upon the conditions for giving adhesiveness to the spacer serving also as an adhesive layer and comprising polyimide. The heating operation is carried out at 300° to 500°C for within 2 hours generally, at 300° to 450°C for within 1 hour particularly, and at 300° to 400°C for 20 to 40 minutes more particularly.

As shown in Figs. 3c and 3d, the unnecessary silicon 3 on the rear surface of the reflective type movable diaphragm unit 2 can be removed by a suitable method, such as an etching method and the like. Regarding the etching method, special limitations are not placed thereon as long as it permits the unnecessary silicon substrate 3 alone to be removed with each constituent element of the optical fiber 1 and reflective type movable diaphragm unit 2 not removed thereby. In general, dry etching is carried out.

The hollow space between the half mirror layer 11 and light reflecting mirror portion 23 can be formed as an atmospheric pressure atmosphere, a depressurized atmosphere or a hot atmosphere of a suitable gas, such as argon, nitrogen, air, etc. The controlling of the pressure in the hollow space can be done by a system for tightly sealing a depressurized atmosphere and a pressurized atmosphere, whereby an absolute pressure measuring pressure sensor utilizing a vacuum in the space and a high pressure measuring pressure sensor utilizing a high pressure in the small-diameter space can be obtained.

The pressure sensor according to the present invention utilizes the interference with each other of the light A reflected on the half mirror layer 11 and that B reflected on the light reflecting mirror portion 23, and is placed in a pressure atmosphere to be measured, whereby the diaphragm portion 25 is deformed in accordance with the pressure to cause a phase shift to occur between the reflected light A, B, interference light on which the phase shift is reflected being formed, a pressure being detected owing to the properties of the interference light. Namely, a pressure can be detected on the basis of the correlation between the variation of an optical distance due to the displacement of the diaphragm portion 25 based on the pressure of an object to be measured and the phases of the reflected light, or the quantity of the reflected light.

The pressure sensor according to the present invention is shaped so that it can be suitably used to measure the pressure in an organism, such as a blood vessel and the like, a capillary, or other narrow parts. The pressure sensor can be manufactured at a high yield, and the connecting of the reflective type movable diaphragm unit 2 and optical fiber 1 together can be done efficiently.

In the example shown in Fig. 4, a reference numeral 1 denotes an optical fiber, 11 a ZnS layer (half mirror layer) thereof, 2 a reflective type movable diaphragm unit, 21 a SiO₂ layer (diaphragm portion) thereof, 22 a SiO₂ layer (mesa portion) thereof, 23 an Al layer (light reflecting mirror portion) thereof, and 24 a polyimide layer (spacer serving also as an adhesive layer) thereof. The example shown in Fig. 4 is different in construction of diaphram portion 21 from that shown in Fig. 1 and which does not form part of the claimed invention. The example of Fig. 4 has a diaphragm portion of a flat shape, the manufacturing of which may be done in accordance with that of the diaphragm portion of Fig. 1.

### Industrial Applicability

According to the present invention, a pressure sensor having at a front end of an optical fiber a circular reflective type diaphragm unit the diameter of which is not larger than that of the optical fiber, and capable of being used in an organism, such as a blood vessel and the like and a capillary can be obtained. The manufacturing method according to the invention is capable of solving the problems of an optical fiber type pressure sensor of related art which include a low yield of manufacturing a pressure sensor portion and a low yield of connecting the pressure sensor and an optical fiber together, and obtaining a pressure sensor, which has the above-mentioned characteristics, at a high yield and a high manufacturing efficiency.

## Claims

1. A pressure sensor including a reflective type movable diaphragm unit (2) which has a mesa portion (22) of a circular, thick SiO₂ film, and a light reflecting mirror portion (23) formed of a thin A1 film, in the center of a diaphragm portion (25) formed of a circular, thin SiO₂ film, and which has a ring-shaped spacer (24) serving also as an adhesive layer at a circumferential edge section thereof, and **CHARACTERISED IN THAT** the diaphragm portion has a cross-sectionally substantially semicircular part.

2. A pressure sensor according to Claim 1, further comprising an optical fiber (1) having a half mirror layer (11) attached to a front end and a diameter not greater than 125 µm, and wherein the ring-shaped spacer (24) is fixed in a sealed state to the front end of the optical fiber (1).

3. A method of manufacturing pressure sensors, comprising the steps of:
manufacturing reflective type movable diaphragm units (2) by accumulating SiO₂ layers on a front surface of a silicon substrate (3) and forming mesa portions (22) by circularly leaving the SiO₂ layers, accumulating SiO₂ layers on a rear surface of the silicon substrate (3) as masks (31) for separating the reflective type movable diaphragm units (2) from the silicon substrate (3), forming diaphragm portions (25) by further accumulating SiO₂ layers on the front surface of the silicon substrate (3), forming light reflecting mirror portions (23) by accumulating Al layers on the mesa portion (22), forming ring-shaped spacers (24) at a circumferential edge of the diaphragm portions (25), the spacers (24) serving also as adhesive layers and comprising polyimide, and separating the reflective type movable diaphragm units (2) from the silicon substrate (3);
forming half mirror layers (11) on front ends of optical fibers (1);
fixing in a sealed state the reflective type movable diaphragm units (2) to the front ends of the optical fibers (1); and
removing the silicon substrates (3) from the rear surfaces of the reflective type movable diaphragm units (2);
**CHARACTERISED IN THAT** the step of forming the diaphragm portions (25) includes the step of accumulating SiO2 layers in annular grooves provided in the front surface of the silicon substrate (3) such that the diaphragm portions (25) include substantially semicircular parts in cross-section.

4. A method of manufacturing pressure sensors according to Claim 3, wherein the step of fixing in a sealed state the reflective type movable diaphragm units (2) to the front ends of the optical fibers (1) includes the steps of: inserting the reflective type movable diaphragm units (2) into capillaries (4) so that the ring-shaped spacers (24) of the reflective type movable diaphragm units (2) and the front ends of the optical fibers (1) are opposed to each other, bringing the reflective type movable diaphragm units (2) and the optical fibers (1) into close contact with each other by microbeads (5) and other optical fibers (6) inserted from the other ends of the capillaries (4), turning the ring-shaped spacers (24) into an adhesive layer by heating the reflective type movable diaphragm units (2), and withdrawing the optical fibers (1) from the capillaries (4).

5. A method of manufacturing pressure sensors according to Claim 3 or Claim 4, wherein the step of separating the reflective type movable diaphragm units (2) from the silicon substrate (3) includes a step of etching the silicon substrate (3) along the masks (31).

6. A method of manufacturing pressure sensors according to any of Claims 3 to 5, wherein the height of the ring-shaped spacers (24) forms a space between the half mirror layers (11) of the optical fibers (1) and the light reflecting mirror portions (23) of the reflective type movable diaphragm units (2).

7. A method of manufacturing pressure sensors according to any of Claims 3 to 6, wherein the ring-shaped spacers (24) comprises a thick polyimide film.

## Patentansprüche

1. Drucksensor, mit einer reflektierenden beweglichen Membraneinheit (2), welche einen Mesa-Abschnitt (22) aus einem kreisförmigen dicken SiO₂-Film aufweist, und mit einem Licht reflektierenden Spiegelabschnitt (23), welcher aus einem dünnen Aluminiumfilm in der Mitte eines Membranabschnitts (25) gebildet ist, welcher wiederum aus einem kreisförmigen dünnen SiO₂-Film geformt ist und welcher einen ringförmigen Abstandshalter (24) hat, welcher auch als eine adhäsive Schicht an einem periphären Kantenabschnitt hiervon dient, **dadurch gekennzeichnet, dass** der Membranabschnitt einen im Querschnitt im Wesentlichen halbkreisförmigen Teil hat.

2. Drucksensor nach Anspruch 1, mit einer optischen Faser (1) mit einer Halbspiegelschicht (11), welche an einem vorderen Ende angebracht ist und einen Durchmesser nicht größer als 125 µm aufweist, und wobei der ringförmige Abstandshalter (24) dichtend an dem vorderen Ende der optischen Faser (1) befestigt ist.

3. Verfahren zum Herstellen von Drucksensoren, mit den Schritten:
Herstellen von reflektierenden beweglichen Membraneinheiten (2) durch Ansammeln von SiO₂-Schichten auf einer vorderen Oberfläche eines Siliziumsubstrats (3) und Bilden von Mesa-Abschnitten (22) durch ein kreisförmiges Belassen der SiO₂-Schichten, Ansammeln von SiO₂-Schichten auf einer hinteren Oberfläche des Siliziumsubstrats (3) als Masken (31) um die reflektierenden beweglichen Membraneinheiten (2) von dem Siliziumsubstrat (3) zu trennen, Bilden von Membranabschnitten (25) durch weiteres Ansammeln von SiO₂-Schichten auf der vorderen Oberfläche des Siliziumsubstrats (3), Bilden von Licht reflektierenden Spiegelabschnitten (23) durch Ansammeln von Aluminiumschichten auf dem Mesa-Abschnitt (22), Bilden von ringförmigen Abstandshaltern (24) an einer Umfangskante der Membranabschnitte (25), wobei die Abstandshalter (24) auch als adhäsive Schichten dienen und Polyimid aufweisen, und Trennen der reflektierenden beweglichen Membraneinheiten (2) von dem Siliziumsubstrat (3),
Bilden von Halbspiegelschichten (11) an den vorderen Enden der optischen Fasern (1),
dichtendes Fixieren der reflektierenden beweglichen Membraneinheiten (2) an den vorderen Enden der optischen Fasern (1), und
Entfernen der Siliziumsubstrate (3) von den hinteren Oberflächen der reflektierenden beweglichen Membraneinheiten (2),
**dadurch gekennzeichnet, dass**
der Schritt Bilden der Membranabschnitte (25) den Schritt Ansammeln von SiO₂-Schichten in ringförmigen Nuten auf der vorderen Oberfläche des Silikonsubstrats (3) derart einschließt, dass die Membranabschnitte (25) im Querschnitt im Wesentlichen halbkreisförmige Teile aufweisen.

4. Verfahren zum Herstellen von Drucksensoren nach Anspruch 3, bei welchem der Schritt dichtendes Fixieren der reflektierenden beweglichen Membraneinheiten (2) an den vorderen Enden der optischen Fasern (1) den Schritt aufweist: Einsetzen der reflektierenden beweglichen Membraneinheiten (2) in Kapillare (4), sodass die ringförmigen Abstandhalter (24) der reflektierenden beweglichen Membraneinheiten (2) und das vordere Ende der optischen Fasern (1) zueinander gegenüber liegen, in engen Kontakt zueinander bringen der reflektierenden beweglichen Membraneinheiten (2) und der optischen Fasern (1) mittels Mikrokugeln (5) und anderen optischen Fasern (6), welche von den anderen Enden der Kapillaren (4) eingesetzt werden, Drehen der ringförmigen Abstandshalter (24) in eine adhäsive Schicht durch Erhitzen der reflektierenden beweglichen Membraneinheiten (2) und Entnehmen der optischen Fasern (1) aus den Kapillaren (4).

5. Verfahren zum Herstellen von Drucksensoren nach Anspruch 3 oder Anspruch 4, wobei der Schritt Trennen der reflektierenden beweglichen Membraneinheiten (2) von dem Silikonsubstrat (3) einen Schritt Ätzen des Siliziumsubstrats (3) entlang der Masken (31) umfasst.

6. Verfahren zum Herstellen von Drucksensoren nach einem der Ansprüche 3 bis 5, wobei die Höhe der ringförmigen Abstandshalter (24) einen Raum zwischen den Halbspiegelschichten (11) der optischen Fasern (1) und den Lichtreflektierenden Spiegelabschnitten (23) der reflektierenden beweglichen Membraneinheiten (2) bildet.

7. Verfahren zum Herstellen von Drucksensoren nach einem der Ansprüche 3 bis 6, bei welchem die ringförmigen Abstandshalter (24) einen dicken Polyimid-Film aufweisen.

## Revendications

1. Capteur de pression comprenant une unité de diaphragme mobile de type réfléchissant (2) qui a une partie de mesa (22) d'un film circulaire épais de SiO₂, et une partie mineure réfléchissant la lumière (23) formée avec un film fin de Al, au centre d'une partie de diaphragme (25) formée avec un film circulaire fin de SiO₂, et qui a un dispositif d'espacement de forme annulaire (24) servant également de couche adhésive au niveau de sa section de bord circonférentiel, et **caractérisé en ce que** la partie de diaphragme a une partie sensiblement semi-circulaire en coupe.

2. Capteur de pression selon la revendication 1, comprenant en outre une fibre optique (1) ayant une couche semi-réfléchissante (11) fixée sur une extrémité avant et un diamètre non supérieur à 125 µm, et dans lequel le dispositif d'espacement de forme annulaire (24) est fixé dans un état étanche sur l'extrémité avant de la fibre optique (1).

3. Procédé pour fabriquer des capteurs de pression comprenant les étapes consistant à :
fabriquer des unités de diaphragme mobile de type réfléchissant (2) en accumulant des couches de SiO₂ sur une surface avant d'un substrat en silicium (3) et former des parties de mesa (22) en laissant de manière circulaire les couches de SiO₂, accumuler les couches de SiO₂ sur une surface arrière du substrat en silicium (3) en tant que masques (31) pour séparer des unités de diaphragme mobile de type réfléchissant (2) du substrat en silicium (3), former des parties de diaphragme (25) en accumulant en outre des couches de SiO₂ sur la surface avant du substrat en silicium (3), former des parties mineures réfléchissant la lumière (23) en accumulant des couches de Al sur la partie de mesa (22), former des dispositifs d'espacement de forme annulaire (24) au niveau d'un bord circonférentiel des parties de diaphragme (25), le dispositif d'espacement (24) servant également de couches adhésives et comprenant du polyimide, et séparer les unités de diaphragme mobile de type réfléchissant (2) du substrat en silicium (3) ;
former les couches semi-réfléchissantes (11) sur les extrémités avant des fibres optiques (1) ;
fixer dans un état étanche, les unités de diaphragme mobile de type réfléchissant sur les extrémités avant des fibres optiques (1) ; et
déplacer les substrats de silicium (3) des surfaces arrière des unités de diaphragme mobile de type réfléchissant (2) ;
**caractérisé en ce que** l'étape consistant à former les parties de diaphragme (25) comprend l'étape consistant à accumuler des couches de SiO₂ dans des rainures annulaires prévues dans la surface avant du substrat en silicium (3), de sorte que les parties de diaphragme (25) comprennent des parties sensiblement circulaires en coupe.

4. Procédé pour fabriquer des capteurs de pression selon la revendication 3, dans lequel l'étape consistant à fixer, dans un état étanche, les unités de diaphragme mobile de type réfléchissant (2) sur les extrémités avant des fibres optiques (1) comprend les étapes consistant à : insérer les unités de diaphragme mobile de type réfléchissant (2) dans des capillaires (4) de sorte que les dispositifs d'espacement de forme annulaire (24) des unités de diaphragme mobile de type réfléchissant (2) et les extrémités avant des fibres optiques (1) sont opposés les uns par rapport aux autres, amener les unités de diaphragme mobile de type réfléchissant (2) et les fibres optiques (1) en contact immédiat les unes par rapport aux autres avec des microbilles (5) et d'autres fibres optiques (6) insérées à partir des autres extrémités des capillaires (4), engager les dispositifs d'espacement de forme annulaire (24) dans une couche adhésive en chauffant les unités de diaphragme mobile de type réfléchissant (2), et retirer les fibres optiques (1) des capillaires (4).

5. Procédé pour fabriquer des capteurs de pression selon la revendication 3 ou la revendication 4, dans lequel l'étape consistant à séparer les unités de diaphragme mobile de type réfléchissant (2) du substrat en silicium (3) comprend une étape consistant à graver le substrat en silicium (3) le long des masques (31).

6. Procédé pour fabriquer des capteurs de pression selon l'une quelconque des revendications 3 à 5, dans lequel la hauteur de dispositif d'espacement de forme annulaire (24) forme un espace entre les couches semi-réfléchissantes (11) des fibres optiques (1) et les parties mineures réfléchissant la lumière (23) des unités de diaphragme mobile de type réfléchissant (2).

7. Procédé pour fabriquer des capteurs de pression selon l'une quelconque des revendications 3 à 6, dans lequel les dispositifs d'espacement de forme annulaire (24) comprennent un film épais de polyimide.
